# EUROPÄISCHE PATENTSCHRIFT

(11) **EP 1 126 972 B1**
(45) Veröffentlichungstag und Bekanntmachung des Hinweises auf die Patenterteilung: **02.01.2008**
(21) Anmeldenummer: 99962134.5
(22) Anmeldetag: 03.11.1999
(51) Int. Cl.: B32B 27/06, B32B 37/15, B29C 47/06, C09J 7/02

(54) **VERFAHREN ZUM HERSTELLEN EINES MEHRSCHICHTIGEN VERBUNDES UND SO HERGESTELLTER VERBUND**
METHOD FOR PRODUCING A MULTILAYER COMPOSITE, AND A COMPOSITE PRODUCED IN SUCH A MANNER
PROCEDE DE PRODUCTION D'UN COMPOSITE MULTICOUCHE, ET COMPOSITE PRODUIT SELON CE PROCEDE

(30) Priorität: 06.11.1998 DE 19851104
(43) Veröffentlichungstag der Anmeldung: 29.08.2001
(73) Patentinhaber: Huhtamaki Forchheim Zweigniederlassung der Huhtamaki Deutschland GmbH & Co. KG, 91301 Forchheim (DE)
(72) Erfinder: GÜNTER, Walter, D-37120 Eddigehausen (DE)
(74) Vertreter: Hutzelmann, Gerhard
(86) Internationale Anmeldenummer: PCT/EP1999/008404
(87) Internationale Veröffentlichungsnummer: WO 2000/027628

(56) Entgegenhaltungen:
- EP-A- 0 282 132
- EP-A- 0 626 381
- FR-A- 2 634 122
- HOSP. FORMUL., 1993, 28/7 (632-634+636+639-640), USA, FEDOTIN M.S. 'Helicobacter pylori-associated ulcer disease: Current treatment options'
- MED KLIN, MAY 15 1993, 88 (5) P297-9, GERMANY, LABENZ J ET AL 'Orale Tripeltherapie zur Helicobacter-pylori-Eradikation bei duodenaler Ulkuskrankheit.'
- AMERICAN JOURNAL OF GASTROENTEROLOGY, 89 (8). 1994. 1203-1205., AL-ASSI M T ET AL 'Clarithromycin, tetracycline, and bismuth: A new nonmetronidazole therapy for Helicobacter pylori infection'
- SCANDINAVIAN JOURNAL OF GASTROENTEROLOGY, 28 (11). 1993. 939-942., GRAHAM D Y ET AL 'Treatment of Helicobacter pylori reduces the rate of rebleeding in peptic ulcer disease'
- GUT, 34 (9). 1993. 1167-1170., LABENZ J ET AL 'AMOXICILLIN PLUS OMEPRAZOLE VERSUS TRIPLE THERAPY FOR ERADICATION OF HELICOBACTER-PYLORI IN DUODENAL ULCER DISEASE A PROSPECTIVE RANDOMIZED AND CONTROLLED STUDY'
- ALIMENT PHARMACOL THER, 7 (1). 1993. 111-113., GRAHAM D Y ET AL 'SHORT REPORT A NON-METRONIDAZOLE TRIPLE THERAPY FOR ERADICATION OF HELICOBACTER-PYLORI INFECTION TETRACYCLINE AMOXICILLIN BISMUTH'
- ANN INTERN MED, 116 (9). 1992. 705-708., GRAHAM D Y ET AL 'EFFECT OF TREATMENT OF HELICOBACTER-PYLORI INFECTION ON THE LONG-TERM RECURRENCE OF GASTRIC OR DUODENAL ULCER A RANDOMIZED CONTROLLED STUDY'

## Beschreibung

Die Erfindung bezieht sich auf ein Verfahren zum Herstellen eines mehrschichtigen Verbundes, mit einer Kunststoff-Schicht, die Release-Eigenschaften gegenüber Klebstoffen aufweist.

Aus der US 4,339,485 ist ein derartiger Verbund bekannt, der jedoch aufwendig in mehreren Verfahrensschritten hergestellt werden muss. Es wird hier vorgeschlagen, ein Release-Coating auf ein Substrat aufzubringen.

Der Erfindung liegt die Aufgabe zugrunde, ein Verfahren aufzuzeigen, mit dem in rationeller Weise ein Verbund aus einer ersten, eventuell als Trägerbahn ausgebildeten Bahn, Kleber, Releaseschicht und einer zweiten Bahn, die ebenfalls als Trägerbahn für die Releaseschicht ausgebildet sein kann, herstellbar ist.

Diese Aufgabe wird erfindungsgemäß dadurch gelöst, daß beim Herstellen des Verbundes eine erste Bahn vorgesehen wird, auf deren einer Seite eine Kleberschicht angeordnet wird, auf welche die Kunststoff-Schicht mit den Release-Eigenschaften folgen wird, die ihrerseits mit einer zweiten Bahn verbunden ist, wobei zumindest die Kleberschicht, die Kunststoff-Schicht mit dem die Release-Eigenschaften aufweisenden Material und die zweite Bahn gleichzeitig im Coextrusionsverfahren auf die erste Bahn aufextrudiert werden, wobei die erste Bahn aus Papier, Vliesstoff, Metall oder Kunststoff und die zweite Bahn aus Kunststoff besteht und wobei die die Release-Eigenschaften erzeugenden Materialien innerhalb der Kunststoff-Schicht angeordnet sind.

Eine weitere vorteilhafte Ausgestaltung der Erfindung liegt darin, daß bei Verwendung von Kunststoff für die erste Bahn diese gereckt wird.

Damit wird eine erhebliche Steigerung der Festigkeit dieser Bahn erzielt.

Ebenfalls sehr vorteilhaft ist es, wenn gemäß einer weiteren Ausgestaltung der Erfindung bei Verwendung einer vorgefertigten Bahn aus Kunststoff, diese vor ihrem Einsatz gereckt wird.

Ein mehrschichtiger Verbund mit einer Kunststoff-Schicht, die Release-Eigenschaften gegenüber Klebstoffen aufweist, ist gemäß einer vorteilhaften Ausgestaltung der Erfindung dadurch gekennzeichnet, daß eine erste Bahn und wenigstens eine zweite Bahn vorgesehen ist, zwischen denen eine Kleberschicht und eine weitere Schicht mit Release-Eigenschaften gegenüber dem Kleber angeordnet sind, wobei die zweite Bahn, die Kleberschicht und die weitere Schicht mit Release-Eigenschaften gegenüber dem Kleber gemeinsam coextrudiert sind, wobei die erste Bahn aus Papier, Vliesstoff, Metall oder Kunststoff und die zweite Bahn aus Kunststoff besteht und wobei die die Release-Eigenschaften erzeugenden Materialien innerhalb der Kunststoff-Schicht angeordnet sind.

Eine vorteilhafte Ausgestaltung des mehrschichtigen Verbundes liegt auch darin, daß weitere Schichten vorgesehen sind, die wahlweise beiderseits der ersten Bahn bzw. der zweiten Bahn angeordnet sind.

Als ebenfalls sehr vorteilhaft hat es sich erwiesen, wenn gemäß einer weiteren Ausgestaltung der Erfindung die erste Bahn von einer gereckten Kunststoffolie gebildet ist.

In der Zeichnung ist die Erfindung anhand von zwei Ausführungsbeispielen veranschaulicht. Dabei zeigen:
- Fig. 1: einen vierschichtigen Verbund, mit einer Papierbahn als Trägerbahn und
- Fig.2: einen fünfschichtigen Verbund, bei dem als Trägerbahn für die Kleberschicht ein Vlies vorgesehen ist.

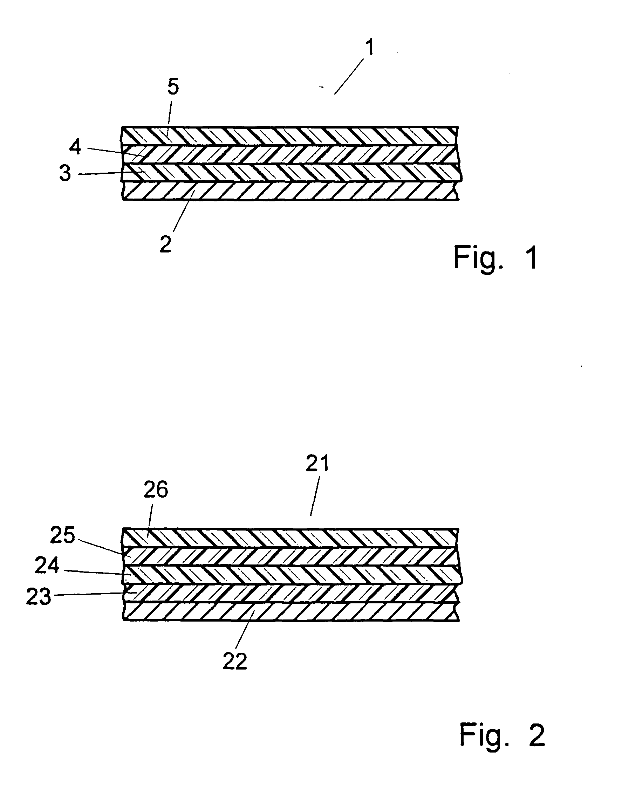

Mit 1 ist in Fig. 1 ein Verbund bezeichnet, der eine erste Bahn 2 aus Papier enthält. Im Coextrusionsverfahren sind auf diese Papier-Bahn 2 eine Kleberschicht 3, eine Schicht 4 mit Release-Eigenschaften gegenüber dem Kleber und eine Kunststoffschicht 5 aufgebracht. Im gleichen Verfahrensschritt kann auch die andere Seite der Papier-Bahn 2 mit weiteren Beschichtungen versehen werden.

Beim Austührungsbeispiel nach Fig.2 ist ein Verbund 21 aus fünf Lagen vorgesehen, wobei die erste Bahn 22 aus einem Vlies gebildet ist. Anstelle von Papier oder Vlies sind auch andere Bahn-Materialien wie z.B. Metall möglich. Auf die Bahn 22 sind eine Kleberschicht 23, eine Release-Schicht 24, eine Kunststoffschicht 25 und eine Abdeckschicht 26 für die Kunststoffschicht im Coextrusionsverfahren aufgebracht.

Für die erste Bahn kommen bei Verwendung von Papier als Trägerbahn für die mit Kleber beschichtete Seite in erster Linie glatte, bedruckbare Papiere zum Einsatz.

Werden die beiden Bahnen bzw. Schichten 2,22 bzw. 5,25 aus Kunststoff hergestellt, so sind hierfür verschiedene Kunststoffe einsetzbar und zwar unabhängig davon, ob sie als fertige Bahnen eingesetzt oder aufextrudiert werden. Besonders vorteilhaft sind dabei LDPE, LLDPE, HDPE, mPE, PS, PET, PETP, PP und OPP.

Die Materialstärke beträgt dabei zwischen 20 und 200 µm.

Als Kleber kommen extrudierbare permanent klebrige Kleber auf Basis von Hotmelts, Schmelzhaftkleber und Polyolefine mit entsprechenden klebrigmachenden Zusätzen in Frage. Verwendet wurden beispielsweise SIS, SBS, SEBS, SEP Blockcopolymerisate mit Schmelzindizes zwischen 8 und 65 g/10min bei 200 °C und 5 kg. Der Styrolgehalt der Polymeren liegt zwischen 10 und 35 %. Die Eigenschaften der Klebstoffschicht werden durch Zugabe von Harzen und Weichmachern gesteuert, z.B. durch aliphatische Hydrocarbonharze, Polyterpenharze, hydrolisierte Hydrocarbonharze, aromatische Hydrocarbonharze, Paraffinwachse, Mikrokristallwachse, Polyisobutylen und Prozessöle.

Flüssige Komponenten werden durch vorgeschaltetes Compoundieren in eine extrusionsfäbige Form gebracht.

Eine weitere Möglichkeit zur Herstellung der Klebeschicht besteht darin, UV-Acrylate oder UV-härtende PSA's mittels Schmelzefördertechnik zwischen die übrigen Schichten einzubringen.

## Patentansprüche

1. Verfahren zum Herstellen eines mehrschichtigen Verbundes(1,21), mit einer Kunststoff-Schicht(4,24), die Release-Eigenschaften gegenüber Klebstoffen aufweist, **dadurch gekennzeichnet, daß** beim Herstellen des Verbundes(1,21) eine erste Bahn(2,22) vorgesehen wird, auf deren einer Seite eine Kleberschicht(3,23) angeordnet wird, auf welche die Kunststoff-Schicht(4,24) mit den Release-Eigenschaften folgen wird, die ihrerseits mit einer zweiten Bahn(5,25) verbunden ist, wobei zumindest die Kleberschicht(3,23), die Kunststoff-Schicht(4,24) mit dem die Release-Eigenschaften aufweisenden Material und die zweite Bahn gleichzeitig im Coextrusionsverfahren auf die erste Bahn(2,22) aufextrudiert werden, wobei die erste Bahn aus Papier, Vliesstoff, Metall oder Kunststoff und die zweite Bahn aus Kunststoff besteht und wobei die die Release-Eigenschaften erzeugenden Materialien innerhalb der Kunststoff-Schicht angeordnet sind.

2. Verfahren nach Anspruch 1, **dadurch gekennzeichnet, daß** bei Verwendung von Kunststoff für die erste Bahn(2,22) diese gereckt wird.

3. Verfahren nach Anspruch 2, **dadurch gekennzeichnet, daß** bei Verwendung einer vorgefertigten Bahn(2,22) aus Kunststoff, diese vor ihrem Einsatz gereckt wird.

4. Mehrschichtiger Verbund hergestellt gemäß dem Verfahren nach einem der vorhergehenden Ansprüche, mit einer Kunststoff-Schicht(4,24), die Release-Eigenschaften gegenüber Klebstoffen aufweist, **dadurch gekennzeichnet, daß** eine erste Bahn(2,22) und wenigstens eine zweite Bahn(5,25) vorgesehen ist, zwischen denen eine Kleberschicht(3,23) und eine weitere Schicht(4,24) mit Release-Eigenschaften gegenüber dem Kleber angeordnet sind, wobei die zweite Bahn, die Kleberschicht und die weitere Schicht mit Release-Eigenschaften gegenüber dem Kleber gemeinsam coextrudiert sind, wobei die erste Bahn aus Papier, Vliesstoff, Metall oder Kunststoff und die zweite Bahn aus Kunststoff besteht und wobei die die Release-Eigenschaften erzeugenden Materialien innerhalb der Kunststoff-Schicht angeordnet sind.

5. Mehrschichtiger Verbund nach Anspruch 4, **dadurch gekennzeichnet, daß** weitere Schichten(26) vorgesehen sind, die wahlweise beiderseits der ersten Bahn(2,22) bzw. der zweiten Bahn(5,25) angeordnet sind.

6. Mehrschichtiger Verbund nach Anspruch 4 oder 5, **dadurch gekennzeichnet, daß** die erste Bahn(2,22) von einer gereckten Kunststoffolie gebildet ist.

## Claims

1. Process for the production of a multilayer composite material (1, 21) with a plastic layer (4, 24) that has release properties with respect to adhesives, **wherein** a first web (2, 22) is provided in production of the composite material (1, 21) on one side of which a layer of adhesive (3, 23) is located, after which the plastic layer (4, 24) with the release properties will follow, which is in turn bonded to a second web (5, 25), where at least the layer of adhesive (3, 23), the plastic layer (4, 24) with the material that has the release properties and the second web are extruded onto the first web (2, 22) simultaneously by the coextrusion process, where the first web consists of paper, nonwoven fabric, metal or plastic and the second web consists of plastic and where the materials producing the release properties are located within the plastic layer.

2. Process according to claim 1, **wherein** the first web (2, 22) is oriented when plastic is used for it.

3. Process according to claim 2, **wherein** the web is oriented before it is used when a web (2, 22) pre-produced from plastic is used.

4. Multilayer composite material produced in accordance with the process as described in one of the previous claims, with a plastic layer (4, 24) that has release properties with respect to adhesives, **wherein** a first web (2, 22) and at least a second web (5, 25) are provided, between which a layer of adhesive (3, 23) and a further layer (4, 24) that has release properties with respect to the adhesive are located, where the second web, the layer of adhesive and the further layer that has release properties with respect to the adhesive are coextruded together, where the first web consists of paper, nonwoven fabric, metal or plastic and the second web consists of plastic and where the materials producing the release properties are located within the plastic layer.

5. Multilayer composite material according to claim 4, **wherein** further layers (26) are provided that are located on the outside of the first web (2, 22) and/or the second web (5, 25).

6. Multilayer composite material according to claim 4 or 5, **wherein** the first web (2, 22) is made from an oriented plastic film.

## Revendications

1. Procédé de fabrication d'un composite multicouche (1, 21), comportant une couche de plastique (4, 24) qui présente des propriétés antiadhésives ou de libération vis-à-vis des colles, **caractérisé en ce que** lors de la fabrication du composite (1, 21), on prévoit une première bande (2, 22) sur une face de laquelle est disposée une couche de colle (3, 23), sur laquelle suit la couche de plastique (4, 24) présentant les propriétés anti-adhésives ou de libération, qui est pour sa part reliée à une seconde bande (5, 25), au moins la couche de colle (3, 23), la couche de plastique (4, 24) avec le matériau présentant des propriétés antiadhésives ou de libération et la seconde bande étant extrudées simultanément sur la première bande (2, 22) dans un procédé de co-extrusion, la première bande étant en papier, en non-tissé, en métal ou en plastique, et la seconde bande étant réalisée en plastique, et les matériaux générant les propriétés antiadhésives ou de libération étant disposés au sein de la couche de plastique.

2. Procédé selon la revendication 1, **caractérisé en ce que** lorsqu'on utilise du plastique pour la première bande (2, 22), celle-ci est étirée.

3. Procédé selon la revendication 2, **caractérisé en ce que** lorsqu'on utilise une bande pré-fabriquée (2, 22) en plastique, celle-ci est étirée avant son utilisation.

4. Composite multicouche fabriqué selon le procédé selon l'une des revendications précédentes, comportant une couche de plastique (4, 24) qui présente des propriétés antiadhésives ou de libération vis-à-vis des colles, **caractérisé en ce que** l'on prévoit une première bande (2, 22) et au moins une seconde bande (5, 25), entre lesquelles sont disposées une couche de colle (3, 23) et une autre couche (4, 24) présentant des propriétés antiadhésives ou de libération vis-à-vis des colles, la seconde bande, la couche de colle et l'autre couche ayant les propriétés antiadhésives ou de libération vis-à-vis de la colle étant co-extrudées conjointement, la première bande étant en papier, en non-tissé, en métal ou en plastique et la seconde bande étant en plastique, et les matériaux générant les propriétés antiadhésives ou de libération étant disposés au sein de la couche de plastique.

5. Composite multicouche selon la revendication 4, **caractérisé en ce que** l'on prévoit d'autres couches (26) qui sont, au choix, disposées sur les deux faces de la première bande (2, 22) ou de la seconde bande (5, 25).

6. Composite multicouche selon la revendication 4 ou 5, **caractérisé en ce que** la première bande (2, 22) est formée d'une feuille de plastique étirée.
